# EUROPEAN PATENT APPLICATION

(11) **EP 1 592 153 A1**
(43) Date of publication of application: **02.11.2005**
(21) Application number: 05009131.3
(22) Date of filing: 26.04.2005
(51) Int. Cl.: H04B 10/10

(54) **Laser communication system with adaptive data rates**

(30) Priority: 27.04.2004 US 832524
(71) Applicant: NORTHROP GRUMMAN CORPORATION, Los Angeles, CA 90067-2199 (US)
(72) Inventor: Farrell, Thomas C., Redondo Beach CA 90278 (US)
(74) Representative: Schmidt, Steffen J.

(57) **Abstract**

A duplex laser communication transceiver, and a method for its operation, in which the effective rates of data transmission on a transmit laser beam are adaptively controlled in response to detection of the instantaneous power of a receive laser beam. Variations in laser beam power caused by atmospheric turbulence are sensed in the transceiver, and effective data transmission rates are controlled appropriately to avoid or minimize data errors. Data bits input to the transceiver for transmission are stored in a data buffer; then retrieved at a rate that is varied in accordance with the instantaneous power. The transmit data rate is decreased or suspended when the laser beam power is low, and increased again when the laser beam power is high. Data signals recovered from the receive laser beam are also buffered, to obtain an output data stream at a uniform rate.

## Description

### BACKGROUND OF THE INVENTION

This invention relates generally to laser communication systems and, more particularly, to laser communication systems in which a laser beam is propagated through the atmosphere. Although communicating over a laser beam is limited to applications in which there is a line of sight between transmitting and receiving terminals, laser communication has significant advantages over radio frequency (RF) communication, especially for some applications. First, a laser beam communication is generally more secure and less vulnerable to eavesdropping than an RF communication. Further, a laser beam can carry data at higher rates than a comparable RF channel. For these and other reasons, a laser system may be preferred in some applications involving air-to-air or air-to-ground communication.

Unfortunately, as is well known, atmospheric effects may have a significant and unwanted effect on laser beams, whether or not in the visible portion of the spectrum. Specifically, turbulent air contains regions of a rapidly changing index of refraction and a laser beam passing through these regions will be subject to unwanted refractions, such that portions of the beam may diverge from the intended path, and may later converge back again, resulting in the formation of interference patterns of bright and dark fringes. When viewed at the receiving end of the beam, the turbulence effects are manifested as scintillations of the received light. That is to say, the power of the received beam varies in a random manner that involves excursions between power levels that are higher than the power of the beam when there is no scintillation, and levels that are much lower. A drawback of laser communication systems that transmit through the atmosphere is that turbulence can cause power excursions that drop the power to a level below which error-free transmission is impossible. In other words, the communication channel formed by the beam is subject to "drop-outs" when the atmosphere is turbulent.

Accordingly, there is a need for improvement in laser communication systems, to allow such systems to be used effectively when the laser beam passes through turbulence in the atmosphere. The present invention addresses this need.

### SUMMARY OF THE INVENTION

The present invention resides in laser communication system, and a related method for its use, in which the data transmission rate is varied to compensate for changes in received beam power caused by atmospheric turbulence. Briefly, and in general terms, the method of the invention is defined by the steps of receiving, in a first transceiver, a receive laser beam transmitted through the atmosphere from a second transceiver; monitoring the power of the receive laser beam; inputting data from an external source, to be transmitted in a transmit laser beam; and controlling the rate at which a data stream is transmitted on the transmit beam, to adapt to power levels obtained in the monitoring step.

More specifically, the step of controlling the data rate includes storing the input data in a data buffer; determining an appropriate transmit data rate from a current level of monitored receive laser beam power; retrieving input data from the data buffer at the rate obtained in the determining step; and modulating the transmit beam with the retrieved input data.

Determining the appropriate transmit data rate may be effected by comparing the current receive laser beam power with a selected threshold; selecting a first data rate if the receive laser beam power is above the selected threshold; and suspending transmission of data if the receive laser beam power is below the selected threshold. In one variant of this method, the input data rate is uniform and the first data rate is selected to be greater than the uniform rate, to compensate for intervals when transmission is suspended.

An alternative approach to determining the appropriate transmit data rate includes selecting a plurality of power thresholds falling within an expected range of receive laser beam power; selecting a plurality of transmit data rates that are to be used depending on the level of the receive laser beam power in relation to the selected power thresholds; and choosing the appropriate transmit data rate from among the plurality of transmit data rates, based on where the receive laser beam power lies in relation to the plurality of thresholds.

The method of the invention may also include the steps of recovering data from the receive laser beam; storing the recovered data in a second data buffer at a rate at which the data is received; and retrieving the recovered data from the second data buffer at a uniform rate.

The invention may also be defined as a transceiver apparatus for use with a similar transceiver in a duplex laser communication system. The transceiver apparatus comprises a transmit laser, generating a transmit laser beam; a data modulator, for modulating the transmit laser beam with data; optical means for focusing and directing the transmit laser beam to a second transceiver, and for capturing a receive laser beam from the second transceiver; a detector for generating a signal indicative of the instantaneous power of the receive laser beam; a received power monitor, for monitoring the instantaneous power of the receive laser beam and determining an appropriate data rate for the transmit laser beam; a first data buffer for storing input data received from an external source; and an adaptive rate controller, for controlling the rate of data retrieval from the first data buffer and controlling the data modulator to transmit data at the appropriate data rate for the transmit laser beam. As in the method of the invention, the transmit data rate is adapted in accordance with the instantaneous power of receive laser beam.

It will be appreciated from the foregoing that the present invention represents a significant advance in laser communication systems, especially in air-to-air or air-to-ground applications. In particular, the invention mitigates the effects of atmospheric turbulence by adaptively controlling the data transmission rate in response to measurements of instantaneous receive laser beam power. Other aspects and advantages of the invention will become apparent from the following more detailed description, taken in conjunction with the accompanying drawing.

### BRIEF DESCRIPTION OF THE DRAWING

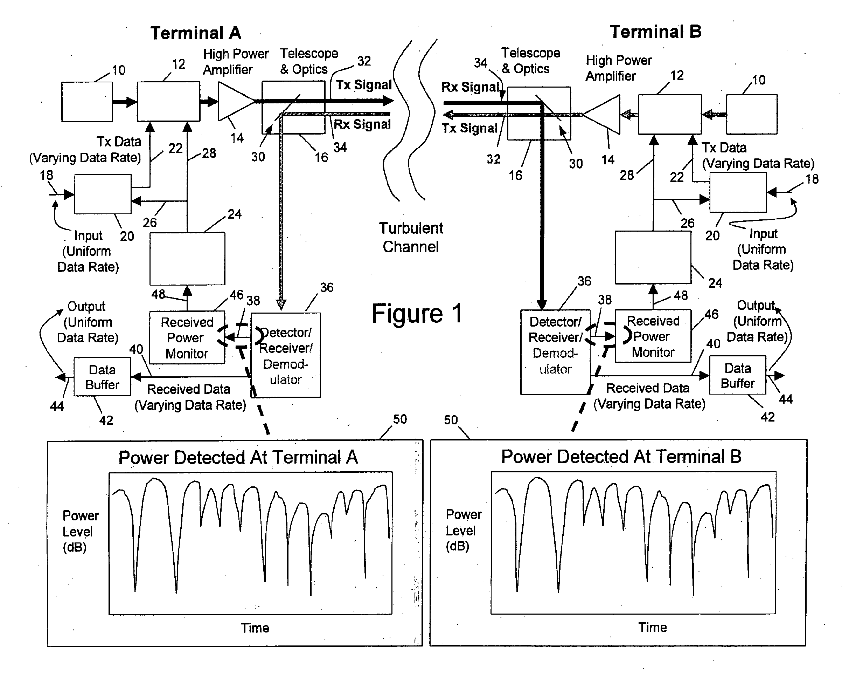

Figure 1 is a block diagram showing two transceiver terminals in a laser communication system constructed in accordance with the invention.

### DETAILED DESCRIPTION OF THE INVENTION

As shown in the drawing for purposes of illustration, the present invention is concerned with laser communication systems, particularly laser communication systems used in air-to-air or air-to-ground applications. Atmospheric turbulence causes scintillations in received beam power, which may fall below a threshold level, below which error-free communication is impossible.

In accordance with the present invention, each transceiver terminal in a laser communication system detects and monitors the received beam power and adjusts the transmission rate to avoid loss of data. The received beam power fairly accurately reflects the turbulent state of the transmission path that is encountered by a transmit beam sent from the terminal that is monitoring the received beam power. Therefore, monitoring the received beam power allows each terminal to adapt its transmission rate or, as further discussed below, its mode of transmission, to minimize transmission errors that might be caused by atmospheric effects. Adapting the transmission rate includes ceasing transmission temporarily when the received beam power is very low (below a selected threshold), and increasing the data transmission rate above the average rate when the received beam power is relatively high (above another selected threshold). The data transmission rate may also be changed more often, either using other selected thresholds or on a continuously variable basis.

Figure 1 shows two identical transceiver terminals, designated terminal A and terminal B. Each terminal includes a transmit laser 10, a data modulator 12, a high power amplifier 14 and a telescope and optics 16. Data for transmission are first input, in digital form and at a uniform data rate, over line 18 to a data buffer 20. The buffer 20 is a large first-in-first-out buffer of sufficient capacity to avoid data loss when the transmit function is slowed down or suspended for short periods. Data bits are output from the data buffer 20 over line 22 to the data modulator 12, under control of an adaptive data rate controller 24, which controls both the rate of data output from the data buffer 20 and the speed of operation of the data modulator 12, as indicated by lines 26 and 28. In normal operation with no atmospheric turbulence, the data buffer 20 delays the input data but does not function to change the data transmission rate, which proceeds at the input data rate.

The telescope and optics 16 include an optical component providing a separate receive signal path, such as a dichroic mirror 30. A convenient way to recover the received signal is to employ different wavelengths for the transmit lasers 10. Then the dichroic mirror 30 can be transparent for the transmit signal 32, but functions as a mirror to the receive signal 34. The receive signal 34 is reflected onto a detector receiver 36, which is an opto-electronic device that produces an electrical signal on line 38 proportional to the receive beam power. The detector/receiver/demodulator 36 also recovers a stream of data bits from the receive beam, as indicated by line 40. This data stream may, of course, have a varying data rate as a result of adaptive control at the terminal that transmitted the data. The potentially varying data rate data stream is input to another data buffer 42, having a similar capacity to that of data buffer 30. An output data stream is withdrawn from the buffer 42 at a uniform data rate, as indicated by line 44.

The receive beam power provided by the detector/receiver/demodulator 36 on line 38 is monitored in a receive beam power monitor 46, which generates appropriate control signals to the adaptive rate controller 24, over line 48. The receive signal beam power output on line 38 varies in accordance with the atmospheric conditions. When there is little or no turbulence, a graph depicting this power variation will be a relatively flat and unvarying curve. During turbulent conditions, the graph resembles the one shown by way of example at 50 in the drawing. The graph is characterized by sharp troughs with durations of 1-10 milliseconds. The troughs are separated by power peaks that look less abrupt relative to the troughs when the power level is plotted in decibels (dB). It has been observed that the average received power in turbulent conditions is approximately the same as the received power in the absence of turbulence.

The principle of operation of the invention relies on the assumption that the transmit signal 32 and the receive signal 34 will be subject to approximately the same turbulence conditions for a time interval long enough to allow transmission data rate changes to track the earlier detected changes in the receive beam power. Since the turbulence conditions affect the beam power at a relatively slow rate, usually measured in milliseconds for a swing from maximum to minimum power, the assumption is valid as a practical matter. The assumption also seems to hold to a good approximation even when considering simultaneous motion of the sending and receiving terminals, through the atmosphere and possibly relative to each other.

The received power monitor 46 and the adaptive data rate controller 24 can control the transmit data rate in accordance with one of several alternative techniques, examples of which are described below:

Example A: The received power monitor 46 senses an excursion of receive beam power below a preselected threshold that represents the lowest power at which data can be transmitted at a nominal data rate, which may be the same as the input data rate on line 18, without uncorrectable data errors. As is well known, some communication channel errors can be corrected by adding redundancy to the data stream and employing digital error correction techniques. Even if such techniques are used, there will still be a power threshold below which uncorrectable errors will occur. In this example, when the received power crosses below this threshold, the adaptive rate controller 24 sends a signal over lines 26 and 28 to stop retrieving data from the data buffer 20 and to suspend operation of the data modulator 12. When the receive beam power crosses above the threshold again, transmission is restarted. If the data buffer 20 is not to "fall behind" by overflowing, the data transmission rate on line 22, when activated, will have to be greater than nominal or input data rate on line 18.

Example 2: In addition to stopping and starting transmission based on a low threshold, the received power monitor 46 also detects when the receive power crosses above a higher selected threshold. Above this higher threshold, it is possible to transmit data at a rate higher than the nominal or input rate. Therefore, when this higher threshold is exceeded, the data buffer 20 and the data modulator 12 are controlled to transmit data at a higher rate, selected to compensate for the data delayed when transmission was suspended.

Example 3: Instead of the higher threshold of Example 2, a sequence of thresholds is established. Crossing above any of the thresholds results in an increased data rate. Crossing below any of the thresholds results in a reduced data rate. Selection of the thresholds and associated data rates is made with a view to maximizing the overall transmission rate that is achievable. A low threshold, below which data transmission is suspended, may not be necessary so long as some low-level data transmission rate may be maintained all the way down to the troughs of the power variation curve. As the selected thresholds are moved closer together, adaptation of the data rate becomes almost continuously variable, subject only to the resolution of power detection in the detector/receiver 36, and to the fineness of rate control provided by the data buffer 20 and the data modulator 12.

In an important alternative implementation of the invention, the data modulator 12 does not vary the actual data transmission rate of the transmit signal 32, but adaptively varies the mode of data modulation to change the user's effective data rate. For example, the actual transmit data rate on line 32 can be maintained at a constant high data rate or "chip rate." A coding scheme is then used in the data modulator 12 to vary the rate at which data is retrieved from the data buffer 20, without affecting the chip rate on the transmit line 32. One possible data coding scheme uses a simple repeat algorithm wherein each data bit is transmitted only once when the received power is very high, but is transmitted multiple times when the received power is lower. Other, more complex data coding schemes may be used to vary the effective data rate without changing the actual data rate on the transmit line 32. Obviously, every change in the effective data rate must be transmitted in some manner, such as in a message header, to the receiving terminal. This alternative form of the invention has the advantage that much of the transmit and receive hardware can be designed to operate at the single high speed chip rate.

It will be apparent from the foregoing description that the invention provides a solution to what has been seen as a significant drawback to laser communication through the atmosphere. Specifically, the invention provides for transmission data rate control to compensate for the effects of atmospheric turbulence, as measured by received beam power in a duplex communication system. Adaptation of the transmit data rate may be based on sensing the power level in relation to one or more preselected thresholds, or may employ stepped rate control that may be made almost continuous within the resolution limits of the power detection and rate control components.

It will be appreciated that, although a specific embodiment of the invention has been illustrated and described in detail, various modifications may be made without departing from the spirit and scope of the invention. Accordingly, the invention should not be limited except as by the appended claims.

## Claims

1. For use in a duplex laser communication system, a method for controlling a transmission data rate to mitigate the effects of atmospheric turbulence, the method comprising the following steps performed in a first transceiver:
receiving a receive laser beam through the atmosphere from a second transceiver;
monitoring the power of the receive laser beam;
inputting data from an external source, to be transmitted in a transmit laser beam; and
controlling the effective rate at which a data stream is transmitted on the transmit beam, to adapt to power levels obtained in the monitoring step.

2. A method as defined in claim 1, wherein the controlling step comprises:
storing the input data in a data buffer;
determining an appropriate effective transmit data rate from a current level of monitored receive laser beam power;
retrieving input data from the data buffer at the rate obtained in the determining step; and
modulating the transmit beam with the retrieved input data.

3. A method as defined in claim 2, wherein the step of determining an appropriate effective transmit data rate comprises:
comparing the current receive laser beam power with a selected threshold;
selecting a first data rate if the receive laser beam power is above the selected threshold; and
suspending transmission of data if the receive laser beam power is below the selected threshold.

4. A method as defined in claim 3, wherein the input data is received at a uniform rate and the first data rate is selected to be greater than the uniform rate, to compensate for intervals when transmission is suspended.

5. A method as defined in claim 2, wherein the step of determining an appropriate effective transmit data rate comprises:
selecting a plurality of power thresholds falling within an expected range of receive laser beam power;
selecting a plurality of transmit data rates that are to be used depending on the level of the receive laser beam power in relation to the selected power thresholds; and
choosing the appropriate transmit data rate from among the plurality of transmit data rates, based on where the receive laser beam power lies in relation to the plurality of thresholds.

6. A method as defined in claim 1, and further comprising the steps of:
recovering data from the receive laser beam;
storing the recovered data in a second data buffer at a rate at which the data is received; and
retrieving the recovered data from the second data buffer at a uniform rate.

7. A method as defined in claim 2, wherein:
the transmit beam is modulated at the effective data rate; and
the transmit beam has an actual data rate that is the same as the effective data rate.

8. A method as defined in claim 2, wherein:
the transmit beam has a constant actual data rate; and
the modulating step comprises the additional step of adapting the effective data rate to the constant actual data rate of the transmit beam.

9. A method as defined in claim 8, wherein:
the step of adapting the effective data rate to the constant actual data rate comprises modulating the transmit beam repeatedly with each bit of data, as needed to adapt the effective data rate to the actual data rate.

10. A transceiver apparatus for use with a similar transceiver in a duplex laser communication system, the apparatus comprising:
a transmit laser, generating a transmit laser beam;
a data modulator, for modulating the transmit laser beam with data;
optical means for focusing and directing the transmit laser beam to a second transceiver, and for capturing a receive laser beam from the second transceiver;
a detector for generating a signal indicative of the instantaneous power of the receive laser beam;
a received power monitor, for monitoring the instantaneous power of the receive laser beam and determining an appropriate data rate for the transmit laser beam;
a first data buffer for storing input data received from an external source; and
an adaptive rate controller, for controlling the rate of data retrieval from the first data buffer and controlling the data modulator to transmit data at the appropriate effective data rate for the transmit laser beam, whereby the effective transmit data rate is adapted in accordance with the instantaneous power of receive laser beam.

11. A transceiver apparatus as defined in claim 10, wherein the received power monitor determines the appropriate data rate by comparing the instantaneous power of the receive laser beam with a selected threshold, and comprises means for selecting a first data rate if the receive laser beam power is above the selected threshold, and means for suspending transmission of data if the receive laser beam power is below the selected threshold.

12. A transceiver apparatus as defined in claim 11, wherein the input data is received at a uniform rate and the first data rate is selected to be greater than the uniform rate, to compensate for intervals when transmission is suspended.

13. A transceiver apparatus as defined in claim 10, wherein the received power monitor comprises:
means for storing a plurality of selected thresholds falling within an expected range of receive laser beam power;
means for storing a plurality of selected transmit data rates that are to be used depending on the level of the instantaneous receive laser beam power in relation to the selected thresholds; and
means for choosing the appropriate transmit data rate from among the plurality of transmit data rates, based on where the receive laser beam lies in relation to the plurality of thresholds.

14. A transceiver apparatus as defined in claim 10, and further comprising:
a receiver for recovering data from the receive laser beam;
a second data buffer for temporarily storing the recovered data; and
means for retrieving the recovered data from the second data buffer at a uniform rate.
